# EUROPEAN PATENT SPECIFICATION

(11) **EP 2 110 767 B1**
(45) Date of publication and mention of the grant of the patent: **21.03.2018**
(21) Application number: 08160976.0
(22) Date of filing: 23.07.2008
(51) Int. Cl.: G06F 21/00, G06F 21/88

(54) **Burglarproof method and system for portable computer devices**
Diebstahlsicheres Verfahren und System für tragbare Computervorrichtungen
Procédé et système anti-effraction pour dispositifs informatiques portables

(30) Priority: 15.04.2008 TW 97113611
(43) Date of publication of application: 21.10.2009
(73) Proprietor: Giga-Byte Technology Co., Ltd., New Taipei City 231 (TW)
(72) Inventor: Chang, An-Sheng, Hsin-Tien, Taipei Hsien (TW); Chuang, Chung-An, Hsin-Tien, Taipei Hsien (TW)
(74) Representative: Cabinet Plasseraud

(56) References cited:
- WO-A1-2006/102399

## Description

### BACKGROUND OF THE INVENTION

### Field of the Invention

The invention relates to portable computer devices, and more particularly to a burglarproof method and system for portable computer devices.

### Description of the Related Art

Current portable computer devices (such as notebooks (NB), ultra mobile personal computers (UMPC), personal digital assistants (PDA), Internet accessible mobile phones, and the like) are not cheap and are often stolen, due in part to their smaller and lighter, size and weight. When a portable computer device is stolen, possibility for retrieving the device is minimal, as thieves may reinstall the operating system or change hardware components, increasing identification difficulty. Additionally, owners of stolen portable computer devices usually have not recourse in providing related device information to track down the device. Examples and embodiments of existing solutions are presented in WO 2006/102399 A1.

Thus, a burglarproof method and system for portable computer devices is desirable.

### BRIEF SUMMARY OF THE INVENTION

Burglarproof methods for portable computer devices are provided. An exemplary embodiment of a burglarproof method for portable computer devices comprises the following. When a portable computer device is activated, hardware components of the portable computer device are detected using a basic input/output system (BIOS). A first hardware data table is created based on detection results using an integrated circuit (IC) of the portable computer device. The IC connects to a data server via a network and uploads the first hardware data table to the data server which serves as a second hardware data table. The first and second hardware data tables comprises an Internet protocol (IP) address respectively retrieved by the connection to the data server and the second hardware data tables further comprise a status field representing a use status of the portable computer device. When the status field represents "stolen", a stolen display function is enabled by the IC.

Burglarproof systems for portable computer devices are provided. An exemplary embodiment of a burglarproof system for portable computer devices comprises a data server and a portable computer device. The portable computer device further comprises a BIOS, a network device, and an IC. The BIOS performs a hardware detection operation when the portable computer device is activated to detect plural hardware components of the portable computer device. The IC creates a first hardware data table based on detection results, connects to the data server via a network using the network device, registers user data to the data server, and uploads the first hardware data table to the data server which serves as a second hardware data table of the data server, wherein the first and second hardware data tables comprises an IP address respectively retrieved by the connection to the data server and the second hardware data tables further comprise a status field representing a use status of the portable computer device, and, when the status field represents "stolen", enables a stolen display function.

A detailed description is given in the following embodiments with reference to the accompanying drawings.

### BRIEF DESCRIPTION OF THE DRAWINGS

The invention can be more fully understood by reading the subsequent detailed description and examples with references made to the accompanying drawings, wherein:
Fig. 1A is a schematic view of a burglarproof system of the present invention;
Fig. 1B is a schematic view of a burglarproof system of another embodiment of the present invention;
Fig. 2 is a flowchart of registering user data for a portable computer device of the present invention;
Fig. 3 is a flowchart of registering user data for a portable computer device of the present invention;
Fig. 4 is a flowchart of registering user data for a portable computer device of another embodiment of the present invention; and
Fig. 5 is a flowchart of transferring or selling the portable computer device and registering new user data of the present invention.

### DETAILED DESCRIPTION OF THE INVENTION

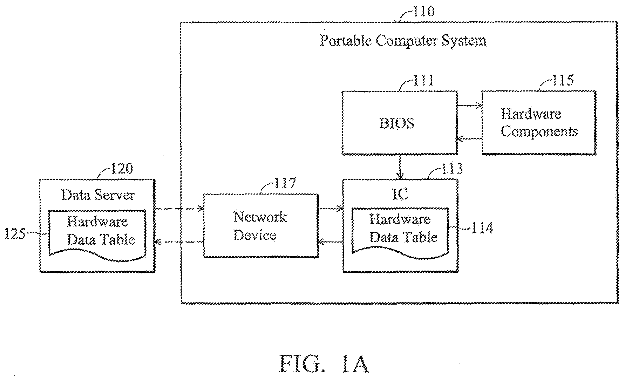

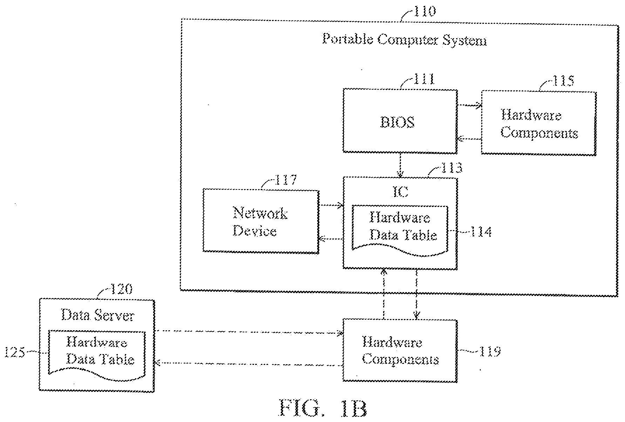

Several exemplary embodiments of the invention are described with reference to Figs. 1 through 5, which generally relate to a burglarproof method and system for portable computer devices. It is to be understood that the following disclosure provides various different embodiments as examples for implementing different features of the invention. Specific examples of components and arrangements are described in the following to simplify the present disclosure. These are, of course, merely examples and are not intended to be limiting. In addition, the present disclosure may repeat reference numerals and/or letters in the various examples. This repetition is for the purpose of simplicity and clarity and does not in itself dictate a relationship between the various described embodiments and/or configurations.

The invention discloses a burglarproof method and system for portable computer devices.

An embodiment of the burglarproof method and system automatically provides useful information for tracking, locating, retrieving and even arresting a thief, when a portable computer device is stolen.

Fig. 1A is a schematic view of a burglarproof system of the present invention.

The burglarproof system comprises a portable computer system 110 and a data server 120. An IC should be internally installed in the portable computer system 110 to implement the invention. When the portable computer system 110 is activated, a BIOS 111 thereof performs a hardware detection operation and enables the IC 113 to automatically record hardware components 115 (such as central processing unit (CPU) identification (ID), a media access control (MAC) address, a hardware model/serial number, a memory model/serial number, a computer serial number, and the like) detected by the BIOS 111. The IC 113 creates a hardware data table 114 based on the detected hardware components 115 and stores the hardware data table 114 in a storage medium (not shown).

When the portable computer system 110 is first activated, before entering an operating system thereof, the IC 113 wired or wireless-connects to the data server 120, automatically, using a network device 117 of the portable computer system 110 via a network, adds an assigned IP address of the portable computer system 110 in the hardware data table 114, uploads the hardware data table 114 to the data server 120 to serve as a hardware data table 125, and registers user data (username and password, for example) for the portable computer system 110 in the data server 120. The hardware data table 125 further comprises a status field representing a use status of the portable computer device 110 and is initially assigned "normal" representing that the portable computer system 110 is legally used by the original owner.

When the portable computer system 110 is reactivated or hardware components thereof are changed, the IC 113 uploads the updated hardware data table 114 (comprising the IP address and status field) to the data server 120 and updates the hardware data table 125 residing in the data server 120, enabling the portable computer system 110 and the data server 120 to comprise the latest hardware data table.

When the portable computer system 110 is stolen, the user can login to the data server 120 via another computer device using the username and password to modify the status field of the hardware data table 125 as "stolen". If a thief connects the portable computer system 110 to a network (the Internet, for example), the IC 113 updates the IP address of the hardware data table 114 and uploads the updated hardware data table 114 to the data server 120 for updating the hardware data table 125, thereby identifying that the portable computer system 110 has been stolen based on the status field of the hardware data table 125.

Meanwhile, the IC 113 enables a stolen display function to lock a screen (not shown) of the portable computer device 110, so that it is incapable of performing any operations by users and enables the screen (not shown) to show stolen information or a speaker (not shown) of the portable computer device 110 to repeatedly generate noise. Additionally, the user can obtain information related to the whereabouts of the portable computer system 110 based on the IP address stored in the hardware data table 125 and retrieve hardware change states according to hardware information recorded in the hardware data table 125 for tracking, locating, and retrieving the portable computer system 110.

When the portable computer system 125 is retrieved, the user can login to the data server 120 via another computer device using the username and password to modify the status field of the hardware data table 125 to "normal", and, when the IC 113 retrieves the status field of the hardware data table 125, the stolen display function is disabled to normally use the portable computer system 110.

When the portable computer system 110 connects to the network using an external network device (a network device 119, as shown in Fig. 1B), the hardware data table 114 may not be automatically uploaded to the data server 120. Thus, when the operating system of the portable computer system 110 is completely installed, the IC 113 automatically installs a preset transmission program by background installation, and, when the portable computer system 110 connects to the network using the external network device 119, the hardware data table 114 is uploaded to the data server 120 using the transmission program.

The network device 119 may be a third generation (3G) network card with a universal serial bus (USB) interface, a personal computer memory card international association (PCMCIA) network card, a USB network card or other compatible network devices.

It is noted that the IC 113 and the BIOS 111 can be combined as an integrated component.

When the portable computer system 110 is transferred or sold to another user, the original owner can login to the data server 120 using the username and password to delete the register data. When the new owner activates the portable computer system 110, the portable computer system 110 automatically connects to the data server 120 to register new user data.

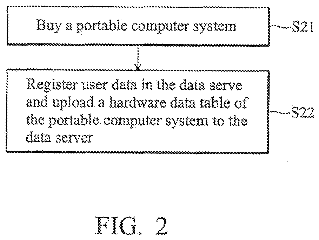

Fig. 2 is a flowchart of registering user data for a portable computer device of the present invention.

When the user buys a portable computer system (step S21), the portable computer system is activated and an IC thereof connects to a data server via a network (the Internet, for example) using an internal network device of the portable computer system, registers user data (username and password, for example) for the portable computer system in the data server, and generates, based on a hardware detection operation performed by a BIOS of the portable computer system, and uploads a hardware data table to the data server (step S22). The hardware data table comprises an IP address assigned by connecting to the data server.

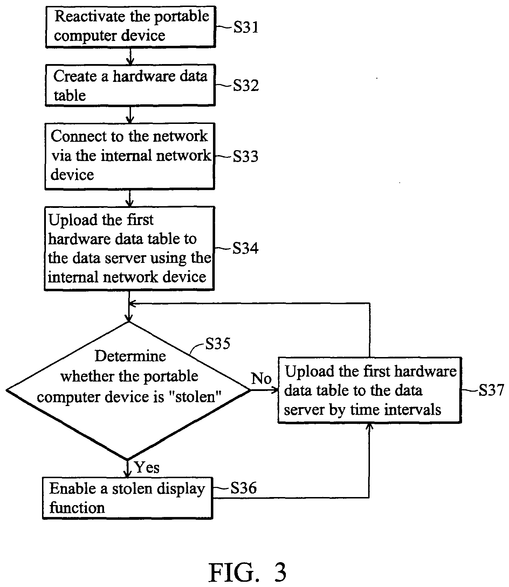

Fig. 3 is a flowchart of registering user data for a portable computer device of the present invention.

When data registration is complete, the portable computer device is reactivated (step S31), and the IC of the portable computer device creates a hardware data table (a first hardware data table) according to hardware components detected by a BIOS of the portable computer device (step S32). The IC determines whether the internal network device is capable of connecting to the network (the Internet, for example) (step S33). If the internal network device is capable of connecting to the network, the IC uploads the first hardware data table to the data server using the internal network device via the network (step S34). Meanwhile, the previously uploaded hardware data table serves as the second hardware data table, further comprising a status field.

It is determined whether the portable computer device is "stolen" based on the status field of the second hardware data table (step S35). As described, when the portable computer device is stolen, the user can login to the data server 120 via another computer device using the username and password to modify the status field of the second hardware data table as "stolen".

When the status field represents "stolen", the IC enables a stolen display function (step S36) to lock a screen (not shown) of the portable computer device to be incapable of performing any operations by users and enables the screen (not shown) to show stolen information or a speaker (not shown) of the portable computer device to repeatedly generate noise, or does nothing to prevent notifying the thief that he or she may be caught. When the portable computer device is still active or the status field of the second hardware data table represents "normal", the IC automatically uploads the first hardware data table to the data server by time intervals (one minute, for example) (step S37).

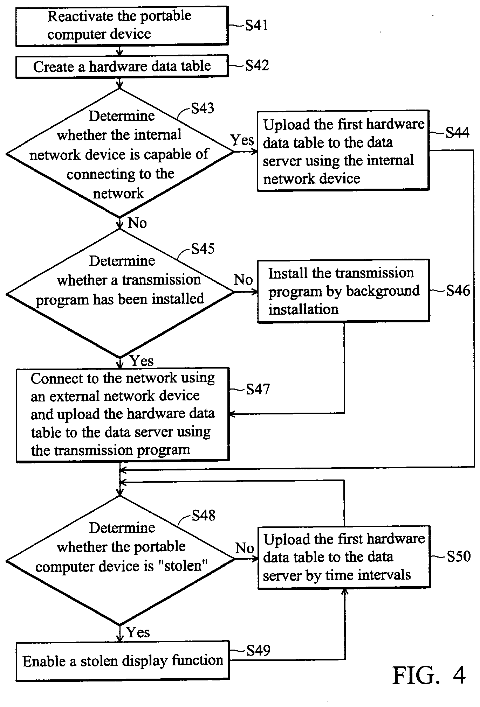

Fig. 4 is a flowchart of registering user data for a portable computer device of another embodiment of the present invention.

When data registration is complete, the portable computer device is reactivated (step S41), and the IC of the portable computer device creates a hardware data table (a first hardware data table) according to hardware components detected by a BIOS of the portable computer device (step S42). The IC determines whether the internal network device is capable of connecting to the network (the Internet, for example) (step S43). If the internal network device is capable of connecting to the network, the IC uploads the first hardware data table to the data server using the internal network device via the network (step S44).

If the internal network device is incapable of connecting to the network, the IC determines whether a transmission program has been installed (step S45). If the transmission program has not been installed, the IC installs the transmission program, stored in a storage medium (not shown), by background installation (step S46). If the transmission program has been installed, the IC connects to the network using an external network device and uploads the first hardware data table to the data server using the transmission program. (step S47). Meanwhile, a previously uploaded hardware data table serves as the second hardware data table.

It is determined whether the portable computer device is "stolen" based on the status field of the second hardware data table (step S48). As described, when the portable computer device is stolen, the user can login to the data server 120 via another computer device using the username and password to modify the status field of the second hardware data table as "stolen".

When the status field represents "stolen", the IC enables a stolen display function (step S49) to lock a screen (not shown) of the portable computer device to be incapable of performing any operations by users and enables the screen (not shown) to show stolen information or a speaker (not shown) of the portable computer device to repeatedly generate noise, or does nothing to prevent notifying the thief that he or she may be caught. When the portable computer device is still active or the status field of the second hardware data table represents "normal", the IC automatically uploads the first hardware data table to the data server by time intervals (one minute, for example) (step S50).

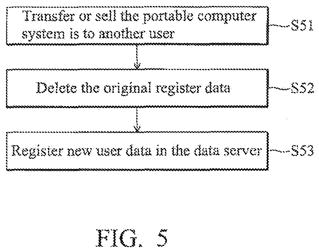

Fig. 5 is a flowchart of transferring or selling the portable computer device and registering new user data of the present invention.

When the portable computer system is transferred or sold to another user (step S51), the original owner can login to the data server using the username and password to delete the register data (step S52). When the new owner activates the portable computer system, the portable computer system automatically connects to the data server to register new user data (step S53).

Methods and systems of the present disclosure, or certain aspects or portions of embodiments thereof, may take the form of a program code (i.e., instructions) embodied in media, such as floppy diskettes, CD-ROMS, hard drives, firmware, or any other machine-readable storage medium, wherein, when the program code is loaded into and executed by a machine, such as a computer, the machine becomes an apparatus for practicing embodiments of the disclosure. The methods and apparatus of the present disclosure may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing and embodiment of the disclosure. When implemented on a general-purpose processor, the program code combines with the processor to provide a unique apparatus that operates analogously to specific logic circuits.

While the invention has been described by way of example and in terms of the preferred embodiments, it is to be understood that the invention is not limited to the disclosed embodiments. To the contrary, it is intended to cover various modifications and similar arrangements. Therefore, the scope of the appended claims should be accorded the broadest interpretation so as to encompass all such modifications and similar arrangements.

## Claims

1. A burglarproof method for portable computer devices, wherein hardware components (115) of the portable computer device (110) are detected by using a BIOS (111) of the portable computer device (110) when a portable computer device (110) is activated, a first hardware data table (114) is created by using an IC (113) of the portable computer device (110) according to the hardware components (115) detected by the BIOS (111) of the portable computer device (110), further comprising:
the IC (113) connecting to a data server (120) via a network and uploading the first hardware data table (114) to the data server (120), wherein the uploaded first hardware data table (114) serves as a second hardware data table (125) and the first and second hardware data tables (114 and 125) comprise an IP address respectively retrieved by the connection to the data server (120) and the second hardware data tables (125) further comprise a status field representing a use status of the portable computer device (110); and
when the status field represents "stolen", enabling a stolen display function by the IC (113), **characterized in that** the IC (113) determines whether an internal network device (117) of the portable computer device (110) is capable of connecting to the network and if the internal network device (117) is capable of connecting to the network, the IC transmitting the first hardware data table (114) to the data server (120) using the internal network device (117) via the network;
wherein the burglarproof method for portable computer devices further comprises:
if the internal network device (117) is incapable of connecting to the network, the IC (113) determining whether a transmission program has been installed;
if the transmission program has not been installed, the IC (113) installs the transmission program by background installation; and
if the transmission program has been installed, the IC (113) connects to the network using an external network device (119) and transmits the first hardware data table (114) to the data server (120) using the transmission program.

2. The burglarproof method for portable computer devices as claimed in claim 1, wherein the stolen display function locks a screen of the portable computer device (110) to be incapable of performing any operations by users and performs a corresponding operation.

3. The burglarproof method for portable computer devices as claimed in claim 2, wherein the corresponding operation enables the screen to show stolen information or a speaker of the portable computer device (110) to repeatedly generate noise.

4. The burglarproof method for portable computer devices as claimed in claim 1, wherein the IC (113) automatically uploads the first hardware data table (114) to the data server (120) by time intervals.

5. The burglarproof method for portable computer devices as claimed in claim 4, wherein the stolen display function is disabled when the status field represents "normal".

6. A burglarproof system for portable computer devices, wherein the burglarproof system comprises a data server (120) and a portable computer device (110), the portable computer device (110) comprises a BIOS (111), a network device (117) and an IC (113), the BIOS (111) configured to perform a hardware detection operation when the portable computer device (110) is activated to detect plural hardware components (115) of the portable computer device (110), the IC (113) configured to create a first hardware data table (114) according to the hardware components (115) detected by the BIOS (111) of the portable computer device (110), further comprising:
the IC (113) configured for connecting to the data server (120) via a network using the network device (117), registering user data to the data server (120), and uploading the first hardware data table (114) to the data server (120), wherein the uploaded first hardware data table (114) serves as a second hardware data table (125) and the first and second hardware data tables (114 and 125) comprise an IP address respectively retrieved by the connection to the data server (120) and the second hardware data tables (125) further comprise a status field representing a use status of the portable
computer device (110), and, when the status field represents "stolen", enabling a stolen display function,
wherein the network device (117) is an internal network device; **characterized in that** the IC (113) configured to determine whether the internal network device (117) is capable of connecting to the network when the portable computer device (110) is activated, and, if the internal network device (117) is capable of connecting to the network, configured to upload the first hardware data table (114) to the data server (120) using the internal network device (117) via the network, and the IC (113) determines whether a transmission program has been installed if the internal network device (117) is incapable of connecting to the network, configured to install the transmission program by background installation if the transmission program has not been installed, and configured to connect to the network using an external network device (119), and if the transmission program has been installed, configured to upload the first hardware data table (114) to the data server (120) using the transmission program.

7. The burglarproof system for portable computer devices as claimed in claim 6, wherein the stolen display function locks a screen of the portable computer device (110) to be incapable of performing any operations by users and performs a corresponding operation.

8. The burglarproof system for portable computer devices as claimed in claim 7, wherein the corresponding operation enables the screen to show stolen information or a speaker of the portable computer device (110) to repeatedly generate noise.

9. The burglarproof system for portable computer devices as claimed in claim 6, wherein the IC (113) is configured to automatically upload the first hardware data table (114) to the data server (120) by time intervals.

10. The burglarproof system for portable computer devices as claimed in claim 9, wherein the stolen display function is disabled when the status field represents "normal".

11. A computer-readable storage medium storing a computer program providing a burglarproof method for portable computer devices, wherein hardware components (115) of the portable computer device (110) are detected using a BIOS (111) of the portable computer device (110) when a portable computer device (110) is activated, a first hardware data table (114) is created by using an IC (113) of the portable computer device (110) according to the hardware components (115) detected by the BIOS (111) of the portable computer device (110),
wherein the burglarproof method is using a computer to perform the steps of:
the IC (113) connecting to a data server (120) via a network and uploading the first hardware data table (114) to the data server (120), wherein the uploaded first hardware data table (114) serves as a second hardware data table (125) and the first and second hardware data tables (114 and 125) comprise an IP address respectively retrieved by the connection to the data server (120) and the second hardware data tables (125) further comprise a status field representing a use status of the portable computer device (110); and
when the status field represents "stolen", enabling a stolen display function by the IC, **characterized in that** the IC (113) determining whether an internal network device (117) of the portable computer device (110) is capable of connecting to the network; and
if the internal network device (117) is capable of connecting to the network, the IC (113) transmits the first hardware data table (114) to the data server (120) using the internal network device (117) via the network;
wherein the computer-readable storage medium further comprises:
if the internal network device (117) is incapable of connecting to the network, the IC (113) determining whether a transmission program has been installed;
if the transmission program has not been installed, the IC (113) installs the transmission program by background installation; and
if the transmission program has been installed, the IC (113) connects to the network using an external network device (119) and transmits the first hardware data table (114) to the data server (120) using the transmission program.

12. The computer-readable storage medium as claimed in claim 11, wherein the IC (113) automatically uploads the first hardware data table (114) to the data server (120) by time intervals.

## Patentansprüche

1. Diebstahlsicheres Verfahren für tragbare Computervorrichtungen, wobei Hardwarekomponenten (115) der tragbaren Computervorrichtung (110) unter Verwendung eines BIOS (111) der tragbaren Computervorrichtung (110) erkannt werden, wenn eine tragbare Computervorrichtung (110) aktiviert wird, wobei eine erste Hardwaredatentabelle (114) unter Verwendung eines IC (113) der tragbaren Computervorrichtung (110) entsprechend den Hardwarekomponenten (115), die vom BIOS (111) der tragbaren Computervorrichtung (110) erkannt wurden, erzeugt wird,
welches ferner Folgendes aufweist:
Verbinden mit einem Datenserver (120) über ein Netz durch den IC (113) und Hochladen der ersten Hardwaredatentabelle (114) zum Datenserver (120) durch den IC (113), wobei die hochgeladene erste Hardwaredatentabelle (114) als eine zweite Hardwaredatentabelle (125) dient und die erste und die zweite Hardwaredatentabelle (114 und 125) jeweils eine IP-Adresse aufweisen, die durch die Verbindung mit dem Datenserver (120) abgerufen wird, und wobei die zweiten Hardwaredatentabellen (125) ferner ein Statusfeld aufweisen, das einen Verwendungsstatus der tragbaren Computervorrichtung (110) repräsentiert, und
wenn das Statusfeld "gestohlen" repräsentiert, Aktivieren einer Gestohlen-Anzeigefunktion durch den IC (113),
**dadurch gekennzeichnet, dass**
der IC (113) feststellt, ob eine interne Netzvorrichtung (117) der tragbaren Computervorrichtung (110) in der Lage ist, sich mit dem Netz zu verbinden, und, falls die interne Netzvorrichtung (117) in der Lage ist, sich mit dem Netz zu verbinden, der IC die erste Hardwaredatentabelle (114) unter Verwendung der internen Netzvorrichtung (117) über das Netz zum Datenserver (120) überträgt,
wobei das diebstahlsichere Verfahren für tragbare Computervorrichtungen ferner Folgendes aufweist:
falls die interne Netzvorrichtung (117) nicht in der Lage ist, sich mit dem Netz zu verbinden, Feststellen, ob ein Übertragungsprogramm installiert wurde, durch den IC (113),
falls das Übertragungsprogramm nicht installiert wurde, Installieren des Übertragungsprogramms durch Hintergrundinstallation durch den IC (113) und
falls das Übertragungsprogramm installiert wurde, Verbinden mit dem Netz unter Verwendung einer externen Netzvorrichtung (119) durch den IC (113) und Übertragen der ersten Hardwaredatentabelle (114) zum Datenserver (120) unter Verwendung des Übertragungsprogramms durch den IC.

2. Diebstahlsicheres Verfahren für tragbare Computervorrichtungen nach Anspruch 1, wobei die Gestohlen-Anzeigefunktion einen Bildschirm der tragbaren Computervorrichtung (110) sperrt, so dass er nicht in der Lage ist, jegliche Operationen durch Benutzer auszuführen, und eine entsprechende Operation ausführt.

3. Diebstahlsicheres Verfahren für tragbare Computervorrichtungen nach Anspruch 2, wobei die entsprechende Operation ermöglicht, dass der Bildschirm Gestohlen-Informationen zeigt, oder einen Lautsprecher der tragbaren Computervorrichtung (110) aktiviert, so dass er wiederholt Geräusche erzeugt.

4. Diebstahlsicheres Verfahren für tragbare Computervorrichtungen nach Anspruch 1, wobei der IC (113) die erste Hardwaredatentabelle (114) automatisch in Zeitintervallen zum Datenserver (120) hochlädt.

5. Diebstahlsicheres Verfahren für tragbare Computervorrichtungen nach Anspruch 4, wobei die Gestohlen-Anzeigefunktion deaktiviert wird, wenn das Statusfeld "normal" repräsentiert.

6. Diebstahlsicheres System für tragbare Computervorrichtungen, wobei das diebstahlsichere System einen Datenserver (120) und eine tragbare Computervorrichtung (110) aufweist und die tragbare Computervorrichtung (110) ein BIOS (111), eine Netzvorrichtung (117) und einen IC (113) aufweist, wobei das BIOS (111) dafür ausgelegt ist, eine Hardwareerkennungsoperation auszuführen, wenn die tragbare Computervorrichtung (110) aktiviert wird, um dadurch mehrere Hardwarekomponenten (115) der tragbaren Computervorrichtung (110) zu erkennen, wobei der IC (113) dafür ausgelegt ist, eine erste Hardwaredatentabelle (114) entsprechend den Hardwarekomponenten (115), die vom BIOS (111) der tragbaren Computervorrichtung (110) erkannt wurden, zu erzeugen,
welches ferner Folgendes aufweist:
den IC (113), der dafür ausgelegt ist, sich über ein Netz unter Verwendung der Netzvorrichtung (117) mit dem Datenserver (120) zu verbinden, Benutzerdaten am Datenserver (120) zu registrieren und die erste Hardwaredatentabelle (114) zum Datenserver (120) hochzuladen, wobei die hochgeladene erste Hardwaredatentabelle (114) als eine zweite Hardwaredatentabelle (125) dient und die erste und die zweite Hardwaredatentabelle (114 und 125) jeweils eine IP-Adresse aufweisen, die durch die Verbindung mit dem Datenserver (120) abgerufen wird, und wobei die zweiten Hardwaredatentabellen (125) ferner ein Statusfeld aufweisen, das einen Verwendungsstatus der tragbaren Computervorrichtung (110) repräsentiert, und, wenn das Statusfeld "gestohlen" repräsentiert, eine Gestohlen-Anzeigefunktion aktiviert,
wobei die Netzvorrichtung (117) eine interne Netzvorrichtung ist,
**dadurch gekennzeichnet, dass**
der IC (113) dafür ausgelegt ist, festzustellen, ob die interne Netzvorrichtung (117) in der Lage ist, sich mit dem Netz zu verbinden, wenn die tragbare Computervorrichtung (110) aktiviert wird, und, falls die interne Netzvorrichtung (117) in der Lage ist, sich mit dem Netz zu verbinden, dafür ausgelegt ist, die erste Hardwaredatentabelle (114) unter Verwendung der internen Netzvorrichtung (117) über das Netz zum Datenserver (120) hochzuladen, und wobei der IC (113) feststellt, ob ein Übertragungsprogramm installiert wurde, falls die interne Netzvorrichtung (117) nicht in der Lage ist, sich mit dem Netz zu verbinden, dafür ausgelegt ist, das Übertragungsprogramm durch Hintergrundinstallation zu installieren, falls das Übertragungsprogramm nicht installiert wurde, und dafür ausgelegt ist, sich unter Verwendung einer externen Netzvorrichtung (119) mit dem Netz zu verbinden, und, falls das Übertragungsprogramm installiert wurde, dafür ausgelegt ist, die erste Hardwaredatentabelle (114) unter Verwendung des Übertragungsprogramms zum Datenserver (120) hochzuladen.

7. Diebstahlsicheres System für tragbare Computervorrichtungen nach Anspruch 6, wobei die Gestohlen-Anzeigefunktion einen Bildschirm der tragbaren Computervorrichtung (110) sperrt, so dass er nicht in der Lage ist, jegliche Operationen durch Benutzer auszuführen, und eine entsprechende Operation ausführt.

8. Diebstahlsicheres System für tragbare Computervorrichtungen nach Anspruch 7, wobei die entsprechende Operation ermöglicht, dass der Bildschirm Gestohlen-Informationen zeigt, oder einen Lautsprecher der tragbaren Computervorrichtung (110) aktiviert, so dass er wiederholt Geräusche erzeugt.

9. Diebstahlsicheres System für tragbare Computervorrichtungen nach Anspruch 6, wobei der IC (113) dafür ausgelegt ist, die erste Hardwaredatentabelle (114) automatisch in Zeitintervallen zum Datenserver (120) hochzuladen.

10. Diebstahlsicheres System für tragbare Computervorrichtungen nach Anspruch 9, wobei die Gestohlen-Anzeigefunktion deaktiviert wird, wenn das Statusfeld "normal" repräsentiert.

11. Computerlesbares Speichermedium, das ein Computerprogramm speichert, welches ein diebstahlsicheres Verfahren für tragbare Computervorrichtungen bereitstellt, wobei Hardwarekomponenten (115) der tragbaren Computervorrichtung (110) unter Verwendung eines BIOS (111) der tragbaren Computervorrichtung (110) erkannt werden, wenn eine tragbare Computervorrichtung (110) aktiviert wird, wobei eine erste Hardwaredatentabelle (114) unter Verwendung eines IC (113) der tragbaren Computervorrichtung (110) entsprechend den Hardwarekomponenten (115), die vom BIOS (111) der tragbaren Computervorrichtung (110) erkannt wurden, erzeugt wird,
wobei das diebstahlsichere Verfahren einen Computer verwendet, um folgende Schritte auszuführen:
Verbinden mit einem Datenserver (120) über ein Netz durch den IC (113) und Hochladen der ersten Hardwaredatentabelle (114) zum Datenserver (120) durch den IC (113), wobei die hochgeladene erste Hardwaredatentabelle (114) als eine zweite Hardwaredatentabelle (125) dient und die erste und die zweite Hardwaredatentabelle (114 und 125) jeweils eine IP-Adresse aufweisen, die durch die Verbindung mit dem Datenserver (120) abgerufen wird, und wobei die zweiten Hardwaredatentabellen (125) ferner ein Statusfeld aufweisen, das einen Verwendungsstatus der tragbaren Computervorrichtung (110) repräsentiert, und
wenn das Statusfeld "gestohlen" repräsentiert, Aktivieren einer Gestohlen-Anzeigefunktion durch den IC (113),
**dadurch gekennzeichnet, dass**
der IC (113) feststellt, ob eine interne Netzvorrichtung (117) der tragbaren Computervorrichtung (110) in der Lage ist, sich mit dem Netz zu verbinden, und, falls die interne Netzvorrichtung (117) in der Lage ist, sich mit dem Netz zu verbinden, der IC die erste Hardwaredatentabelle (114) unter Verwendung der internen Netzvorrichtung (117) über das Netz zum Datenserver (120) überträgt,
wobei das computerlesbare Speichermedium ferner Folgendes aufweist:
falls die interne Netzvorrichtung (117) nicht in der Lage ist, sich mit dem Netz zu verbinden, Feststellen, ob ein Übertragungsprogramm installiert wurde, durch den IC (113),
falls das Übertragungsprogramm nicht installiert wurde, Installieren des Übertragungsprogramms durch Hintergrundinstallation durch den IC (113) und
falls das Übertragungsprogramm installiert wurde, Verbinden mit dem Netz unter Verwendung einer externen Netzvorrichtung (119) durch den IC (113) und Übertragen der ersten Hardwaredatentabelle (114) zum Datenserver (120) unter Verwendung des Übertragungsprogramms durch den IC.

12. Computerlesbares Speichermedium nach Anspruch 11, wobei der IC (113) die erste Hardwaredatentabelle (114) automatisch in Zeitintervallen zum Datenserver (120) hochlädt.

## Revendications

1. Procédé antivol pour des dispositifs ordinateurs portables, dans lequel des composants de matériel (115) du dispositif ordinateur portable (110) sont détectés en utilisant un BIOS (111) du dispositif ordinateur portable (110) lorsqu'un dispositif ordinateur portable (110) est activé, une première table de données de matériel (114) est créée en utilisant un CI (113) du dispositif ordinateur portable (110) selon les composants de matériel (115) détectés par le BIOS (111) du dispositif ordinateur portable (110),
comprenant en outre :
la connexion du CI (113) à un serveur de données (120) via un réseau et le téléversement de la première table de données de matériel (114) vers le serveur de données (120), dans lequel la première table de données de matériel (114) téléversée sert de seconde table de données de matériel (125) et les première et seconde tables de données de matériel (114 et 125) comprennent une adresse IP récupérée respectivement par la connexion au serveur de données (120) et les secondes tables de données de matériel (125) comprennent en outre un champ de statut représentant un statut d'utilisation du dispositif ordinateur portable (110) ; et
lorsque le champ de statut représente « volé », l'activation d'une fonction d'affichage « volé » par le CI (113),
**caractérisé en ce que**
le CI (113) détermine si un dispositif de réseau interne (117) du dispositif ordinateur portable (110) est capable de se connecter au réseau et si le dispositif de réseau interne (117) est capable de se connecter au réseau, la transmission par le CI de la première table de données de matériel (114) au serveur de données (120) à l'aide du dispositif de réseau interne (117) via le réseau ;
dans lequel le procédé antivol pour des dispositifs ordinateurs portables comprend en outre :
si le dispositif de réseau interne (117) est incapable de se connecter au réseau, le fait de déterminer par le CI (113) si un programme de transmission a été installé ;
si le programme de transmission n'a pas été installé, le CI (113) installe le programme de transmission par une installation d'arrière-plan ; et
si le programme de transmission a été installé, le CI (113) se connecte au réseau à l'aide d'un dispositif de réseau externe (119) et transmet la première table de données de matériel (114) au serveur de données (120) à l'aide du programme de transmission.

2. Procédé antivol pour des dispositifs ordinateurs portables selon la revendication 1, dans lequel la fonction d'affichage «volé» verrouille un écran du dispositif ordinateur portable (110) pour qu'il soit incapable de réaliser toute opération par des utilisateurs et réalise une opération correspondante.

3. Procédé antivol pour des dispositifs ordinateurs portables selon la revendication 2, dans lequel l'opération correspondante permet à l'écran de montrer des informations « volé » ou à un haut-parleur du dispositif ordinateur portable (110) de générer un bruit de façon répétée.

4. Procédé antivol pour des dispositifs ordinateurs portables selon la revendication 1, dans lequel le CI (113) téléverse automatiquement la première table de données de matériel (114) vers le serveur de données (120) par intervalles de temps.

5. Procédé antivol pour des dispositifs ordinateurs portables selon la revendication 4, dans lequel la fonction d'affichage « volé » est désactivée lorsque le champ de statut représente « normal ».

6. Système antivol pour des dispositifs ordinateurs portables, dans lequel le système antivol comprend un serveur de données (120) et un dispositif ordinateur portable (110), le dispositif ordinateur portable (110) comprend un BIOS (111), un dispositif de réseau (117) et un CI (113), le BIOS (111) étant configuré pour réaliser une opération de détection de matériel lorsque le dispositif ordinateur portable (110) est activé pour détecter plusieurs composants de matériel (115) du dispositif ordinateur portable (110), le CI (113) étant configuré pour créer une première table de données de matériel (114) selon les composants de matériel (115) détectés par le BIOS (111) du dispositif ordinateur portable (110),
comprenant en outre :
le CI (113) configuré pour se connecter au serveur de données (120) via un réseau à l'aide du dispositif de réseau (117), enregistrer des données d'utilisateur dans le serveur de données (120), et téléverser la première table de données de matériel (114) vers le serveur de données (120), dans lequel la première table de données de matériel (114) téléversée sert de seconde table de données de matériel (125) et les première et seconde tables de données de matériel (114 et 125) comprennent une adresse IP récupérée respectivement par la connexion au serveur de données (120) et les secondes tables de données de matériel (125) comprennent en outre un champ de statut représentant un statut d'utilisation du dispositif ordinateur portable (110), et, lorsque le champ de statut représente « volé », l'activation d'une fonction d'affichage « volé »,
dans lequel le dispositif de réseau (117) est un dispositif de réseau interne ;
**caractérisé en ce que** le CI (113) est configuré pour déterminer si le dispositif de réseau interne (117) est capable de se connecter au réseau lorsque le dispositif ordinateur portable (110) est activé, et, si le dispositif de réseau interne (117) est capable de se connecter au réseau, est configuré pour téléverser la première table de données de matériel (114) vers le serveur de données (120) à l'aide du dispositif de réseau interne (117) via le réseau, et le CI (113) détermine si un programme de transmission a été installé si le dispositif de réseau interne (117) est incapable de se connecter au réseau, est configuré pour installer le programme de transmission par une installation d'arrière-plan si le programme de transmission n'a pas été installé, et est configuré pour se connecter au réseau à l'aide d'un dispositif de réseau externe (119), et si le programme de transmission a été installé, est configuré pour téléverser la première table de données de matériel (114) vers le serveur de données (120) à l'aide du programme de transmission.

7. Système antivol pour des dispositifs ordinateurs portables selon la revendication 6, dans lequel la fonction d'affichage «volé» verrouille un écran du dispositif ordinateur portable (110) pour qu'il soit incapable de réaliser toute opération par des utilisateurs et réalise une opération correspondante.

8. Système antivol pour des dispositifs ordinateurs portables selon la revendication 7, dans lequel l'opération correspondante permet à l'écran de montrer des informations « volé » ou à un haut-parleur du dispositif ordinateur portable (110) de générer un bruit de façon répétée.

9. Système antivol pour des dispositifs ordinateurs portables selon la revendication 6, dans lequel le CI (113) est configuré pour téléverser automatiquement la première table de données de matériel (114) vers le serveur de données (120) par intervalles de temps.

10. Système antivol pour des dispositifs ordinateurs portables selon la revendication 9, dans lequel la fonction d'affichage « volé » est désactivée lorsque le champ de statut représente « normal ».

11. Support de stockage lisible par ordinateur stockant un programme d'ordinateur fournissant un procédé antivol pour des dispositifs ordinateurs portables, dans lequel des composants de matériel (115) du dispositif ordinateur portable (110) sont détectés à l'aide d'un BIOS (111) du dispositif ordinateur portable (110) lorsqu'un dispositif ordinateur portable (110) est activé, une première table de données de matériel (114) est créée en utilisant un CI (113) du dispositif ordinateur portable (110) selon les composants de matériel (115) détectés par le BIOS (111) du dispositif ordinateur portable (110),
dans lequel le procédé antivol utilise un ordinateur pour réaliser les étapes de :
connexion du CI (113) à un serveur de données (120) via un réseau et téléversement de la première table de données de matériel (114) vers le serveur de données (120), dans lequel la première table de données de matériel (114) téléversée sert de seconde table de données de matériel (125) et les première et seconde tables de données de matériel (114 et 125) comprennent une adresse IP récupérée respectivement par la connexion au serveur de données (120) et les secondes tables de données de matériel (125) comprennent en outre un champ de statut représentant un statut d'utilisation du dispositif ordinateur portable (110) ; et
lorsque le champ de statut représente « volé », activation d'une fonction d'affichage « volé » par le CI,
**caractérisé en ce que**
le CI (113) détermine si un dispositif de réseau interne (117) du dispositif ordinateur portable (110) est capable de se connecter au réseau ; et
si le dispositif de réseau interne (117) est capable de se connecter au réseau, le CI (113) transmet la première table de données de matériel (114) au serveur de données (120) à l'aide du dispositif de réseau interne (117) via le réseau ;
dans lequel le support de stockage lisible par ordinateur comprend en outre :
si le dispositif de réseau interne (117) est incapable de se connecter au réseau, le CI (113) détermine si un programme de transmission a été installé ;
si le programme de transmission n'a pas été installé, le CI (113) installe le programme de transmission par une installation d'arrière-plan ; et
si le programme de transmission a été installé, le CI (113) se connecte au réseau à l'aide d'un dispositif de réseau externe (119) et transmet la première table de données de matériel (114) au serveur de données (120) à l'aide du programme de transmission.

12. Support de stockage lisible par ordinateur selon la revendication 11, dans lequel le CI (113) téléverse automatiquement la première table de données de matériel (114) vers le serveur de données (120) par intervalles de temps.
